# FASCICULE DE BREVET EUROPEEN

(11) **EP 2 439 140 B1**
(45) Date de publication et mention de la délivrance du brevet: **17.04.2013**
(21) Numéro de dépôt: 11183706.8
(22) Date de dépôt: 03.10.2011
(51) Int. Cl.: B64D 27/26, B64D 27/18

(54) **Attache de type spigot pourvue d'au moins un moyen de mesure de l'effort généré par un moteur d'aéronef**
Zapfenbefestigung mit Mittel zur Messung der durch einen Luftfahrzeugantrieb erzeugten Kräfte
Spigot fastener comprising means for measuring the loads generated by an aircraft engine.

(30) Priorité: 05.10.2010 FR 1058071
(43) Date de publication de la demande: 11.04.2012
(73) Titulaire: Airbus Operations (S.A.S.), 31060 Toulouse (FR)
(72) Inventeur: Rogero, Jean-Michel, 31300 Toulouse (FR); Fabre, Christian, 31170 Tournefeuille (FR); Magnin, Hervé, 31130 Flourens (FR)
(74) Mandataire: Coquel, Jean-Marc

(56) Documents cités:
- WO-A2-2009/118469
- GB-A- 2 074 289

## Description

La présente invention concerne une attache de type spigot pourvue d'au moins un moyen de mesure de l'effort généré par un moteur d'aéronef.

Une telle attache est particulièrement destinée au domaine de l'aéronautique pendant le vol d'essai pour mesurer le plus précisément possible ces efforts.

Sur les aéronefs existants, les moteurs sont soit suspendus en dessous de la voilure par une structure d'accrochage, soit accrochés latéralement au mât fixé sous le fuselage. Cette structure d'accrochage est également appelée mât d'accrochage ou pylône. De façon connue, ce pylône présente une structure rigide formant un caisson, c'est-à-dire constituée par l'assemblage de longerons raccordés entre eux par une pluralité de nervures transversales.

Dans les deux configurations d'accrochage, la liaison structurale entre la structure primaire du mât et la voilure est généralement réalisée par trois attaches, une attache avant constituée de deux demi-attaches latérales, une attache arrière, ainsi qu'une attache intermédiaire destinée à reprendre les efforts de poussée générés par le moteur associé. Pour ce faire, l'attache intermédiaire destinée à reprendre les efforts de poussée, également appelée attache « spigot », est de façon générale matérialisée par une rotule fixée dans le longeron supérieur arrière de la structure rigide, entre l'attache avant et l'attache arrière. Cette attache spigot aux dimensions très importantes comprend aussi un axe, ou pion de cisaillement, fixé sous la voilure de l'aéronef par l'intermédiaire d'une ferrure d'encastrement, de façon à pouvoir se loger dans la rotule.

La document WO 2009/118469, qui décrit toutes les caractéristiques du préambule de la revendication 1, montre un telle attache.

La liaison structurale entre le moteur et le mât d'accrochage est réalisée généralement par deux attaches, une attache avant disposée à la pointe d'une pyramide, une attache arrière et d'un dispositif de reprise des efforts de pousse muni de bielles latérales de reprises. La pyramide permet l'avancée du moteur par rapport à l'aile.

Cette structure d'accrochage du moteur a donc pour fonction principale d'accrocher le moteur par rapport un élément de voilure ou de fuselage tout en permettant une reprise des efforts de poussée efficace par un ensemble d'éléments de reprise des efforts tels que des bielles et l'attache spigot. Dans le cadre de la mesure de l'effort généré par le moteur, il est connu d'instrumenter cette structure d'accrochage pour mesurer la poussée du moteur. Plus précisément, les bielles du dispositif d'accrochage entre le moteur et le mât sont équipées de jauges de contrainte pour mesurer un effort généré par le moteur en fonctionnement et transmis au système de mesure par l'intermédiaire des éléments de reprise d'effort.

Dans le cadre de la mesure de l'effort, il serait donc particulièrement intéressant d'instrumenter également l'attache spigot pour mesurer la poussée. On entend par instrumenter le spigot, de monter un ou plusieurs moyens de mesure de poussée tels que des jauges de contrainte sur le spigot.

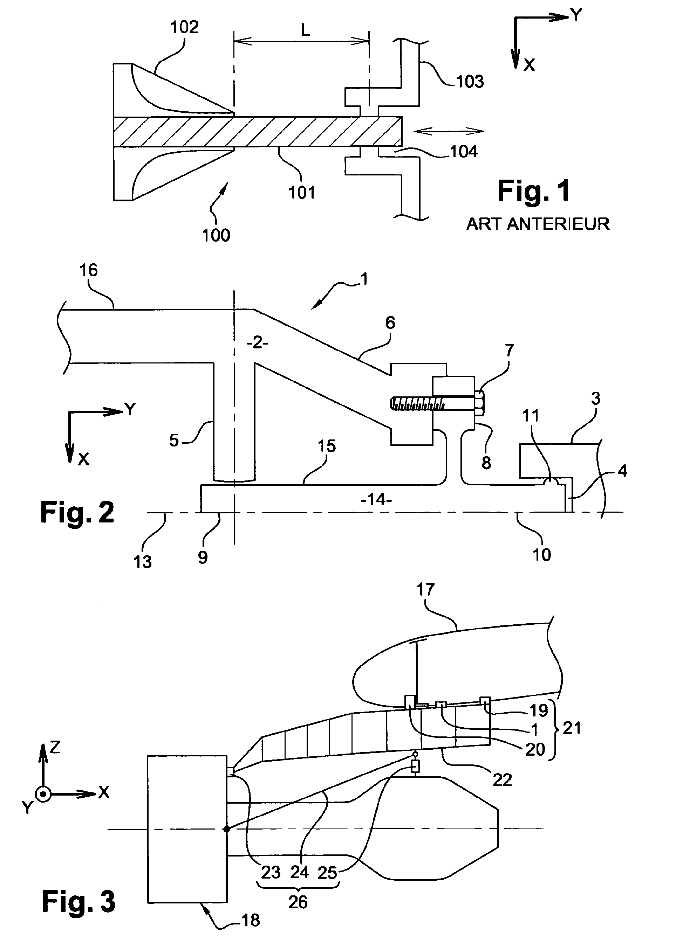

Toutefois, selon la forme conventionnelle du spigot, il n'est pas possible de l'instrumenter. La figure 1 illustre schématiquement la forme structurale d'un tel spigot 100. Il est composé essentiellement d'un axe 101 dont une extrémité est fixée de manière rigide à un élément de structure 102 tel qu'un longeron du mât, l'extrémité opposée pénètre sans jeu dans un logement 104 réalisé dans un élément de structure 103, par exemple dans la voilure. Le spigot est placé dans un repère orthonormé (OXYZ). Sous l'effet des efforts de poussée, l'axe 101 se déplace librement suivant l'axe (OY) et la longueur L qui définit la longueur de contrainte, varie, ce qui rend difficile la mesure des efforts de poussée.

La présente invention propose une nouvelle forme structurale de l'attache spigot qui peut être interposée entre la voilure et une structure d'accrochage ou mât d'accrochage destinée à reprendre les efforts de poussée générés par le moteur associé, tout en permettant de réaliser des mesures plus précises en instrumentant au moins un des éléments de l'attache spigot.

Pour ce faire, l'attache spigot selon la présente invention comporte une pièce intermédiaire interposée entre l'axe et le logement de sorte à maintenir la longueur de contrainte L constante tout en maintenant une mobilité de l'axe dans le logement. De cette façon, le spigot travaille essentiellement sur la longueur L qui ne varie pas ou peu, rendant ainsi les mesures plus précises.

L'objet de l'invention est donc de réaliser une attache de type spigot pour aéronef destinée à être interposée entre la structure de l'aéronef et une structure d'accrochage de moteur d'aronef, cette attache étant conçue pour la reprise des efforts générés par le moteur d'aéronef selon deux axes orthogonaux (OX) et (OZ).

Selon l'invention, elle comprend une première pièce, une extrémité de ladite première pièce étant solidarisée à une deuxième pièce, une extrémité de la deuxième pièce étant séparée de la première pièce d'une distance j et l'extrémité opposée de la deuxième pièce venant se loger dans un logement d'une troisième pièce via une saillie, de sorte que les efforts selon les deux axes sont transmis par la première pièce à la troisième pièce par l'intermédiaire de la deuxième pièce et en ce que des moyens de mesure de l'effort sont montés sur au moins une des pièces.

Selon une forme de réalisation de l'invention, la deuxième pièce est composée d'un axe de diamètre r et d'une collerette d'épaisseur e, ledit axe étant orienté parallèlement à l'axe (OY).

Compte tenu de la fonction essentielle qu'elle remplit, à savoir permettre une transmission des efforts de la première pièce vers la troisième pièce tout en maintenant la longueur de contrainte L constante et tout en assurant une sécurisation dans une telle attache de l'invention, la rigidité de l'axe doit être supérieure à la rigidité de la collerette.

Selon une forme de réalisation de l'invention, cette deuxième pièce est d'un seul tenant.

Selon une autre forme de réalisation de l'invention, la collerette est une pièce rapportée sur l'axe.

Afin de mesurer les efforts de poussée transmis selon les axes (OX) et (OZ), il est prévu d'équiper l'attache d'un moyen de mesure de l'effort selon l'axe (OX) par la mesure du déplacement de l'extrémité de la deuxième pièce par rapport à la première pièce.

De préférence, le jeu j existant entre l'extrémité d'une extension de la première pièce et l'axe de la deuxième pièce qui est orienté parallèlement à l'axe de symétrie de l'attache de type spigot, est déterminé de manière à ce que lorsqu'un seuil de charge est dépassé selon les axes OX ou OZ, l'extrémité de l'axe de la deuxième pièce entre en contact avec une extension de la première pièce.

Avantageusement, le jeu j n'est pas constant suivant les différentes directions afin d'imposer des limites d'efforts différentes.

L'invention concerne également un ensemble pour aéronef comprenant un moteur, une structure d'accrochage, ledit ensemble comprenant une pluralité d'attaches moteur interposées entre la voilure d'aéronef et la structure d'accrochage de moteur.

Dans différents modes de réalisation possibles, l'invention sera décrite plus en détails en référence aux dessins annexés dans lesquels :
- la figure 1 représente schématiquement une attache de type spigot selon l'art antérieur ;
- la figure 2 représente schématiquement une vue en coupe d'une attache moteur de type spigot selon l'invention ;
- la figure 3 représente schématiquement une vue en coupe d'un ensemble défini selon l'invention interposé entre le mât d'accrochage et la voilure.

De manière générale, il est particulièrement intéressant de pouvoir mesurer dans les conditions réelles du vol d'un avion l'effort réel généré par le moteur. Cette mesure précise de la valeur réelle de la poussée d'un moteur est particulièrement importante pour l'industrie aéronautique afin d'optimiser le coût de la consommation en kérosène de l'avion.

L'attache de type spigot telle que représentée sur la figure 2 permet de relier un mât d'accrochage de moteur sous la voilure de l'aéronef. Conformément à une caractéristique essentielle de l'invention, cette attache est un dispositif simple et compact, dimensionné et optimisé de façon à ne transmettre au mât d'accrochage que les efforts exercés par le moteur selon deux directions orthogonales.

Pour analyser les efforts transmis par l'attache, on affecte au moteur un repère orthonormé OXYZ, dans lequel l'axe OX, dirigé vers l'avant, est orienté selon l'axe longitudinal du moteur, l'axe OY est orienté latéralement dans un plan horizontal et l'axe OZ est orienté verticalement vers le haut. La figure 2 illustre l'attache affectée dans un tel repère. Par rapport à ce repère, l'attache transmet des efforts de poussée selon une première direction, principalement parallèle à l'axe longitudinal du moteur OX, et selon une deuxième direction, principalement parallèle à un axe transversal du moteur, perpendiculaire à l'axe OX.

Plus précisément, l'attache de la présente invention est également conçue pour être instrumentée par des moyens de mesure qui sont agencés de manière appropriée sur les pièces constituant l'attache pour mesurer les efforts transmis.

La figure 2 illustre de manière schématique une vue en coupe d'une telle attache spigot ou attache à encastrement 1 dans le plan (OXY). Sa forme étant symétrique par rapport à un axe de symétrie 13, la figure 1 représente uniquement une partie de l'attache par rapport à cet axe de symétrie.

L'attache spigot comporte une première pièce 2. Cette première pièce 2 comporte un axe 16 orienté parallèlement à l'axe de symétrie 13. Une extrémité de cet axe 16 est destinée à venir se fixer par exemple sur un élément de structure du mât d'accrochage au moyen de fixations mécaniques connues. L'extrémité opposée de cet axe 16 comporte deux extensions 5, 6. Une première de ces extensions référencée 5 est disposée perpendiculairement à l'axe 16, l'autre extension 6 étant solidarisée à une deuxième pièce 14. Les première et deuxième pièces 2 et 14 sont assemblées l'une à l'autre, par exemple au moyen de boulon 7 ou d'écrous.

Cette deuxième pièce 14 est composée d'un axe 15 de diamètre r orienté parallèlement à l'axe 13 et d'une collerette 8 d'épaisseur e.

Une extrémité 9 de cet axe est séparée du bord inférieur de la première extension 5 de la première pièce 2 d'une distance j, et l'extrémité opposée 10 de cet axe 15 vient se loger dans un logement 4 d'une troisième pièce 3. L'extrémité 10 est pourvue d'une saillie 11 telle qu'un bossage ou une rotule qui vient en appui contre la paroi interne du logement 4. Ce bossage est fixe par rapport à l'axe 15 et par rapport au logement 4.

Ainsi la première pièce 2 est rigidement fixée sur une pièce intermédiaire qui est libre de se déplacer selon l'axe OY dans le logement 4 de la troisième pièce 3. La reprise des efforts selon les axes O X et OZ sont ainsi transmis par la première pièce 2 à la troisième pièce 3 par l'intermédiaire de la deuxième pièce 14.

De préférence, la rigidité de l'axe 15 doit être largement supérieure à la rigidité de la collerette 8. De préférence la pièce 14 est d'un seul tenant, mais elle peut aussi être un axe avec une collerette rapportée. Dans ce cas, la liaison entre l'axe et la collerette ne doit pas présenter de possibilité de matage.

Les efforts à l'interface entre la deuxième pièce 14 et la troisième pièce 3 entraînent une déformation de la collerette 8 dans le sens de l'épaisseur e. Cette déformation entraîne une variation du jeu j entre l'extrémité de la première extension 5 et l'axe 15. Le jeu j est choisi de manière à éviter le contact sur la plage de mesure des efforts et pour entrer en contact au-delà de la plage de mesure, avant plastification de la collerette.

L'épaisseur e est avantageusement faible pour permettre une meilleure déformation dans le sens de l'axe Ox de la collerette 8. On cherche ainsi à mesurer la déformation de la collerette 8 selon l'axe Ox afin de déterminer l'effort selon l'axe Ox.

Il existe plusieurs moyens pour mesurer la déformation, le plus courant étant la jauge de contrainte.

L'invention concerne également un ensemble 21 pour aéronef qui comprend un moteur 18, une structure d'accrochage 22. Cet ensemble comprend une pluralité d'attaches moteurs 1, 19, 20 interposée entre la voilure d'aéronef 17 et la structure d'accrochage 22 de moteur. Le moteur 18 est également relié à la structure d'accrochage par l'intermédiaire d'un deuxième ensemble 26 d'attaches 23, 24, 25.

Selon une forme particulière de l'invention telle qu'illustrée sur la figure 3, le premier ensemble 21 comporte une attache arrière, une attache avant et une attache intermédiaire interposées entre le moteur et le mât d'accrochage.

Les termes « avant » et « arrière » sont à considérer par rapport à une direction d'avancement de l'aéronef rencontrée suite à la poussée exercée par les moteurs, cette direction étant parallèle à l'axe OX.

L'attache intermédiaire est une attache de type spigot telle que décrite ci-dessus pour la reprise des efforts selon les axes OX et OY. Dans le contexte de cette application, la première pièce 2 est fixée par exemple sur le longeron supérieur du mât d'accrochage 22 et la troisième pièce 3 est fixée sous la voilure 17 de l'aéronef par l'intermédiaire d'une ferrure. De cette façon, les efforts de poussées générés par le moteur 18 sont transmis via le mât d'accrochage 22 vers la voilure. En particulier, ces efforts sont repris par l'attache spigot 1 qui permet de les mesurer précisément grâce aux jauges de contrainte montées sur l'axe 15 et sur la collerette 8.

## Revendications

1. Attache (1) de type spigot pour aéronef destinée à être interposée entre la structure de l'aéronef et une structure d'accrochage de moteur d'aéronef, ladite attache étant conçue pour la reprise des efforts générés par le moteur selon deux axes orthogonaux (OX) et (OZ), **caractérisée en ce qu'**elle comprend une première pièce (2), une extrémité de ladite première pièce étant solidarisée à une deuxième pièce (14), une extrémité (9) de la deuxième pièce étant séparé de la première pièce d'une distance j, et l'extrémité opposée (10) de la deuxième pièce venant se loger dans un logement (4) d'une troisième pièce (3) via une saillie (11), de sorte que les efforts selon les deux axes sont transmis par la première pièce (2) à la troisième pièce (3) par l'intermédiaire de la deuxième pièce (14) et **en ce que** des moyens de mesure de l'effort sont montés sur au moins une des pièces.

2. Attache selon la revendication 1, **caractérisée en ce que** la deuxième pièce est composée d'un axe (15) de diamètre r et d'une collerette (8) d'épaisseur e, ledit axe étant orienté parallèlement à l'axe (OY).

3. Attache selon la revendication 2, **caractérisée en ce que** la rigidité de l'axe (15) doit être supérieure à la rigidité de la collerette (8).

4. Attache selon la revendication 3, **caractérisée en ce que** la deuxième pièce (14) est d'un seul tenant.

5. Attache selon la revendication 3, **caractérisée en ce que** la collerette est une pièce rapportée sur l'axe.

6. Attache selon l'une des revendications 1 à 5, **caractérisé en ce que** l'attache est munie d'un moyen de mesure de l'effort selon l'axe (OX) par la mesure du déplacement de l'extrémité (9) de l'axe (15) par rapport à la première pièce (2).

7. Attache selon la revendication 6, **caractérisé en ce que** le jeu j est déterminé de manière à ce que lorsqu'un seuil de charge est dépassé selon les axes OX ou OZ, l'extrémité (9) de l'axe (15) entre en contact avec une extension (5) de la première pièce (2).

8. Attache selon la revendication 7, **caractérisé en ce que** le jeu j n'est pas constant suivant les différentes directions afin d'imposer des limites d'efforts différentes.

9. Attache selon l'une des revendications 1 à 8, **caractérisé en ce que** l'extrémité (10) de l'axe (15) comporte une saillie telle qu'un bossage ou rotule (11) fixe par rapport à l'axe (13) et au logement (4)

10. Ensemble (21) pour aéronef comprenant un moteur (18), une structure d'accrochage (22), ledit ensemble comprenant une pluralité d'attaches moteurs (1, 19, 20) interposée entre la voilure d'aéronef (17) et la structure d'accrochage (22) de moteur, **caractérisé en ce que** ladite pluralité d'accrochage moteur comprend au moins une attache de type spigot (1) selon l'une quelconque des revendications 1 à 9.

## Claims

1. An airframe fastener (1) of the spigot type intended to be disposed between the airframe structure and an aero engine attachment structure, said fastener being designed to absorb the forces generated by the engine on two orthogonal axes (OX) and (OZ), **characterized in that** it comprises a first part (2), one end of said first part being fastened to a second part (14), one end (9) of the second part being separated from the first part by a distance j, and the opposite end (10) of the second part being received in a housing (4) in a third part (3) via a projection (11), so that the forces on the two axes are transmitted by the first part (2) to the third part (3) via the second part (14) and **in that** force measuring means are mounted on at least one of the parts.

2. A fastener according to claim 1, **characterized in that** the second part consists of a shaft (15) of diameter r and a flange (8) of thickness e, said shaft being oriented parallel to the axis (OY).

3. A fastener according to claim 2, **characterized in that** the stiffness of the shaft (15) must be greater than the stiffness of the flange (8).

4. A fastener according to claim 3, **characterized in that** the second part (14) is in one piece.

5. A fastener according to claim 3, **characterized in that** the flange is a separate part attached to the shaft.

6. A fastener according to any one of claims 1 to 5, **characterized in that** the fastener is provided with means for measuring the force on the axis (OX) by measuring the displacement of the end (9) of the shaft (15) relative to the first part (2).

7. A fastener according to claim 6, **characterized in that** the clearance j is determined so that when a load threshold along the axes OX or OZ is exceeded, the end (9) of the shaft (15) comes into contact with an extension (5) of the first part (2).

8. A fastener according to claim 7, **characterized in that** the clearance j is not constant in different directions in order to impose different force limits.

9. A fastener according to any one of claims 1 to 8, **characterized in that** the end (10) of the shaft (15) has a projection such as a boss or ball joint (11) fixed relative to the shaft (13) and the housing (4).

10. An airframe assembly (21) comprising an engine (18) and an attachment structure (22), said assembly comprising a plurality of engine mounts (1, 19, 20) disposed between the airframe wing (17) and the engine attachment structure (22), **characterized in that** said plurality of engine mounts comprises at least one spigot-type attachment (1) according to any one of claims 1 to 9.

## Patentansprüche

1. Befestigung (1) von der Art Zapfen für ein Luftfahrzeug, die dazu bestimmt ist, zwischen die Struktur des Luftfahrzeugs und eine Luftfahrzeugmotor-Aufhängungsstruktur eingefügt zu werden, wobei die Befestigung für die Aufnahme der vom Motor gemäß zwei orthogonalen Achsen (OX) und (OZ) erzeugten Kräften konzipiert ist, **dadurch gekennzeichnet, dass** sie ein erstes Bauteil (2) enthält, wobei ein Ende des ersten Bauteils fest mit einem zweiten Bauteil (14) verbunden ist, wobei ein Ende (9) des zweiten Bauteils vom ersten Bauteil um einen Abstand j getrennt ist, und das entgegengesetzte Ende (10) des zweiten Bauteils sich in eine Aufnahme (4) eines dritten Bauteils (3) über einen Vorsprung (11) einfügt, so dass die Kräfte entlang der zwei Achsen vom ersten Bauteil (2) über das zweite Bauteil (14) an das dritte Bauteil (3) übertragen werden, und dass Einrichtungen zur Messung der Kraft auf mindestens eines der Bauteile montiert sind.

2. Befestigung nach Anspruch 1, **dadurch gekennzeichnet, dass** das zweite Bauteil aus einer Achse (15) mit einem Durchmesser r und aus einem Kragen (8) mit einer Dicke e besteht, wobei die Achse parallel zur Achse (OY) ausgerichtet ist.

3. Befestigung nach Anspruch 2, **dadurch gekennzeichnet, dass** die Steifheit der Achse (15) größer sein muss als die Steifheit des Kragens (8).

4. Befestigung nach Anspruch 3, **dadurch gekennzeichnet, dass** das zweite Bauteil (14) aus einem Stück besteht.

5. Befestigung nach Anspruch 3, **dadurch gekennzeichnet, dass** der Kragen ein auf die Achse aufgesetztes Bauteil ist.

6. Befestigung nach einem der Ansprüche 1 bis 5, **dadurch gekennzeichnet, dass** die Befestigung mit einer Einrichtung zur Messung der Kraft gemäß der Achse (OX) durch die Messung der Verschiebung des Endes (9) der Achse (15) bezüglich des ersten Bauteils (2) versehen ist.

7. Befestigung nach Anspruch 6, **dadurch gekennzeichnet, dass** das Spiel j so bestimmt wird, dass, wenn eine Lastschwelle entlang der Achsen OX oder OZ überschritten wird, das Ende (9) der Achse (15) mit einer Verlängerung (5) des ersten Bauteils (2) in Kontakt kommt.

8. Befestigung nach Anspruch 7, **dadurch gekennzeichnet, dass** das Spiel j gemäß den verschiedenen Richtungen nicht konstant ist, um unterschiedliche Kraftgrenzen vorzugeben.

9. Befestigung nach einem der Ansprüche 1 bis 8, **dadurch gekennzeichnet, dass** das Ende (10) der Achse (15) einen Vorsprung wie eine Wölbung oder ein Kugelgelenk (11) aufweist, der bezüglich der Achse (13) und der Aufnahme (4) ortsfest ist.

10. Einheit (21) für ein Luftfahrzeug, die einen Motor (18), eine Aufhängungsstruktur (22) enthält, wobei die Einheit eine Vielzahl von Motorbefestigungen (1, 19, 20) enthält, die zwischen der Luftfahrzeug-Trägfläche (17) und der Motor-Aufhängungsstruktur (22) eingefügt sind, **dadurch gekennzeichnet, dass** die Vielzahl von Motorbefestigungen mindestens eine Befestigung von der Art Zapfen (1) nach einem der Ansprüche 1 bis 9 enthält.
